# EUROPEAN PATENT APPLICATION

(11) **EP 4 765 362 A1**
(43) Date of publication of application: **24.06.2026**
(21) Application number: 25864592.8
(22) Date of filing: 11.07.2025
(51) Int. Cl.: H01M 50/105, B29C 51/08, B29C 51/26, B29C 43/36

(54) **POUCH-TYPE EXTERIOR MEMBER AND APPARATUS AND METHOD FOR FORMING SAME**

(30) Priority: 26.09.2024 KR 20240131126
(71) Applicant: LG ENERGY SOLUTION, LTD., Seoul 07335 (KR)
(72) Inventor: Kim, Won Nyeon, Daejeon 34122 (KR); Oh, Sang Seung, Daejeon 34122 (KR); Kim, Gwan Yeon, Daejeon 34122 (KR); Jeon, Jae Beom, Daejeon 34122 (KR)
(74) Representative: Goddar, Heinz J.
(86) International application number: PCT/KR2025/010187
(87) International publication number: WO 2026/071424

(57) **Abstract**

A pouch-type exterior according to an embodiment of the present disclosure may include a cup portion formed into a recessed shape; and a terrace portion connected to the cup portion. A circumference portion of the cup portion may include a concave portion that curves inwards; a first circumference portion located between a bottom portion of the cup portion and the concave portion; and a second circumference portion located between the concave portion and the terrace portion. The concave portion may curve inwards from the first circumference portion and the second circumference portion.

## Description

### TECHNICAL FIELD

### CROSS-REFERENCE TO RELATED APPLICATIONS

This application is based on and claims priority from Korean Patent Application No. 10-2024-0131126 filed on September 26, 2024 with the Korean Intellectual Property Office, the disclosure of which is incorporated herein in its entirety by reference.

### TECHNICAL FIELD

The present disclosure relates to a pouch-type exterior for a secondary battery, and a forming apparatus and a forming method for manufacturing the pouch-type exterior.

### BACKGROUND

In general, the types of secondary batteries include nickel cadmium batteries, nickel hydrogen batteries, lithium-ion batteries and lithium-ion polymer batteries. Secondary batteries are used in not only small products such as digital cameras, PDVDs, MP3Ps, mobile phones, PDAs, portable game devices, power tools and E-bikes, but also large products requiring high output such as electric vehicles or hybrid electric vehicles and energy storage systems that store surplus power or new renewable energy and energy storage systems for backup.

To manufacture secondary batteries, first, an electrode active material slurry is applied to a positive current collector and a negative current collector to manufacture a positive electrode and a negative electrode, and the positive electrode and the negative electrode are stacked on two sides of a separator to form an electrode assembly of a predetermined shape. Additionally, the electrode assembly is housed in an exterior, followed by electrolyte injection and sealing.

Secondary batteries are classified into a pouch type and a can type according to the exterior accommodating the electrode assembly. In particular, the pouch-type exterior may be manufactured by draw forming a flexible pouch film to form a cup portion. Additionally, the electrode assembly may be housed in the cup portion and a terrace portion may be sealed to manufacture a secondary battery.

The draw forming is generally performed by inserting the pouch film between a die and a stripper and applying pressure to the pouch film using a punch to stretch the pouch film.

However, in this case, when the cup portion is formed with a large depth, cracks may occur in the pouch film, raising a safety issue.

### DISCLOSURE

### TECHNICAL PROBLEM

The present disclosure is directed to providing a pouch-type exterior in which a circumference portion of a cup portion includes a concave portion to minimize crack risks in the cup portion and accommodate an electrode assembly having a larger thickness.

The present disclosure is further directed to providing a forming apparatus and a forming method for manufacturing the pouch-type exterior.

### TECHNICAL SOLUTION

A pouch-type exterior according to an embodiment of the present disclosure may include a cup portion formed into a recessed shape; and a terrace portion connected to the cup portion. A circumference portion of the cup portion may include a concave portion that curves inwards; a first circumference portion located between a bottom portion of the cup portion and the concave portion; and a second circumference portion located between the concave portion and the terrace portion. The concave portion may curve inwards from the first circumference portion and the second circumference portion.

A length dimension of the concave portion may be more than half a depth dimension of the cup portion with respect to a depth direction of the cup portion.

A length dimension of the concave portion may be larger than a length dimension of each of the first circumference portion and the second circumference portion with respect to a depth direction of the cup portion.

A thickness of the concave portion may be larger than a thickness of each of the first circumference portion and the second circumference portion.

A thickness of the concave portion may correspond to a thickness of the terrace portion.

A forming apparatus according to an embodiment of the present disclosure may form a pouch film. The forming apparatus may include a die having a forming space on which the pouch film is placed, wherein the forming space is recessed from an upper surface or penetrates through the die; and a punch configured to apply pressure to the pouch film while the punch is inserted into the forming space. An outer circumference of the punch may include a concave groove formed along the outer circumference of the punch and configured to adsorb the pouch film.

The outer circumference of the punch may further include a first circumferential surface located below the concave groove; and a second circumferential surface located on the concave groove. The concave groove may curve inwards from the first circumferential surface and the second circumferential surface.

When the punch is inserted into the forming space, the first circumferential surface, the second circumferential surface and the concave groove may face an inner circumference of the forming space with the pouch film positioned therebetween.

With respect to a direction in which the punch is inserted into the forming space, a length dimension of the concave groove may be larger than a length dimension of each of the first circumferential surface and the second circumferential surface.

The forming apparatus may further include a negative pressure generation unit connected to the punch and configured to generate negative pressure to the concave groove.

The concave groove may have a plurality of suction holes communicating with the negative pressure generation unit and configured to adsorb the pouch film by applying the negative pressure to the pouch film.

A forming method according to an embodiment of the present disclosure may form a pouch film. The forming method may include the steps of placing the pouch film on a die; applying, by a punch, pressure to the pouch film while the punch is inserted into a forming space of the die; and causing the pouch film to be adsorbed onto a concave groove formed along an outer circumference of the punch.

### ADVANTAGEOUS EFFECTS

According to an exemplary embodiment of the present disclosure, in the process of forming a pouch film using a punch, a part of the pouch film adsorbed onto the concave groove may experience little or no stretching. Accordingly, it may be possible to reduce a part of the pouch film that is subjected to stretching, thereby reducing crack risks.

In addition, the part of the pouch film adsorbed onto the concave groove may be flattened in the subsequent process of placing the electrode assembly. That is, because the cup portion may be finally formed with sufficiently large depth, the punch does not need to stretch the pouch film to an excessive extent to make sure that the final depth of the cup portion is sufficiently large. Accordingly, it may be possible to further reduce crack risks in the pouch film and provide an advantage that the cup portion can accommodate the electrode assembly having a larger thickness.

Besides, the effects of the present disclosure may include effects that can be easily predicted by those skilled in the art from the configurations according to the exemplary embodiments of the present disclosure.

### BRIEF DESCRIPTION OF THE DRAWINGS

The accompanying drawings illustrate exemplary embodiments of the present disclosure and together with the following detailed description, serve to provide a better understanding of the technical aspects of the present disclosure, and thus the present disclosure should not be construed as being limited to the drawings.
FIGS. 1 and 2 are schematic diagrams of a forming apparatus according to an embodiment of the present disclosure.
FIGS. 3 and 4 are schematic diagrams of a forming apparatus according to a comparative example.
FIG. 5 is a flowchart of a forming method according to another embodiment of the present disclosure.
FIG. 6 is a cross-sectional view of a pouch-type exterior according to still another embodiment of the present disclosure.

### BEST MODE

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

In the drawings, each component of a secondary battery according to an embodiment of the present disclosure is schematically depicted, and the size of the component or the thickness of the line may be exaggerated to some extent for convenience of understanding.

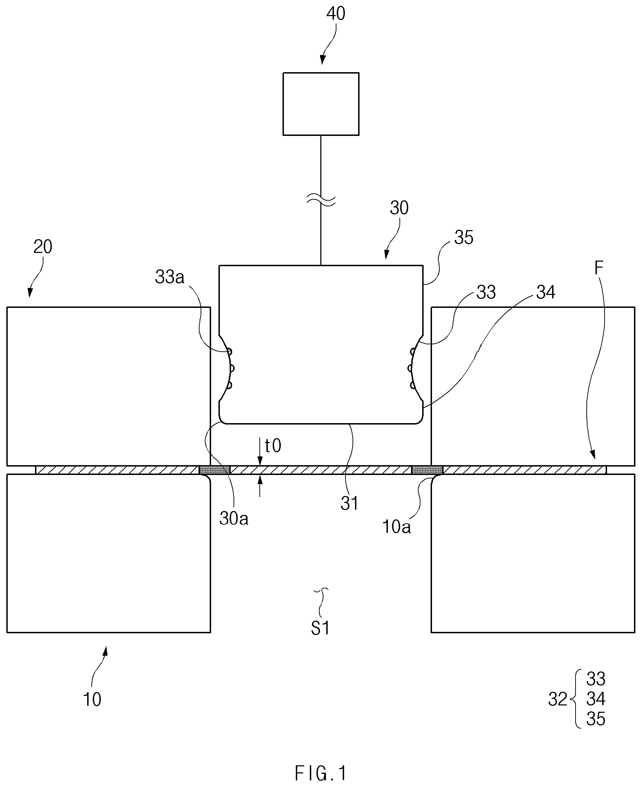

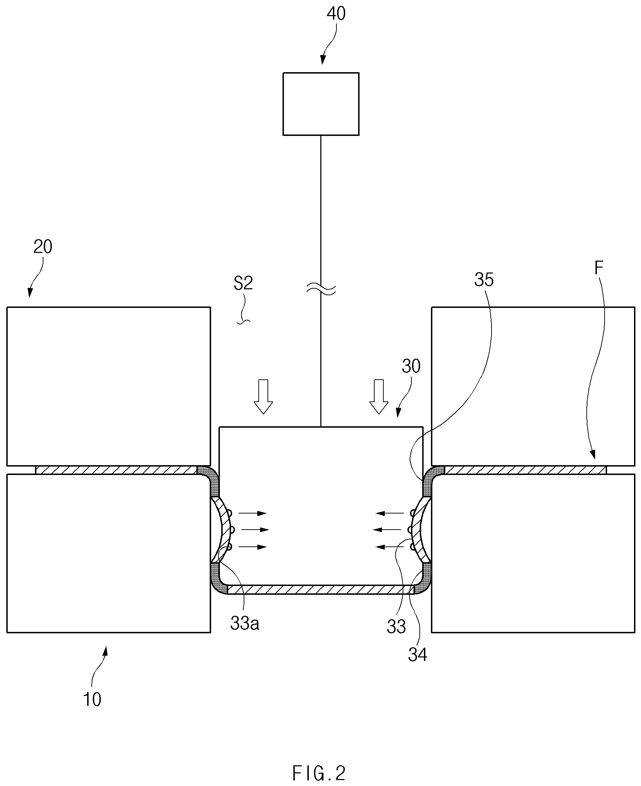

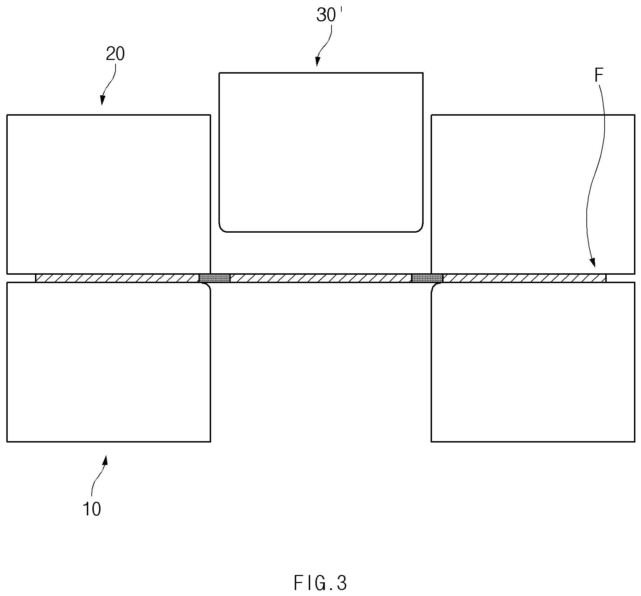

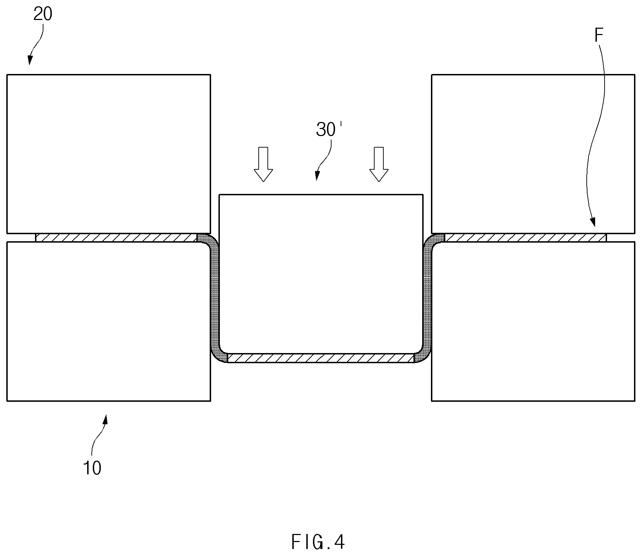

FIGS. 1 and 2 are schematic diagrams of a forming apparatus according to an embodiment of the present disclosure, and FIGS. 3 and 4 are schematic diagrams of a forming apparatus according to a comparative example.

The forming apparatus according to an embodiment of the present disclosure may form a pouch film F. The pouch film F may have a predetermined thickness (t0). The pouch film F may be a laminate sheet having formability. More specifically, the pouch film F may be a laminate sheet in which a pair of resin layers located at two outermost sides and a metal layer located between the pair of resin layers are laminated together.

The forming apparatus according to an embodiment of the present disclosure may include a die 10 and a punch 30. The forming apparatus may further include a stripper 20.

Some of the die 10, the stripper 20 and the punch 30 may be configured to move with respect to the others. As an example, any one of the die 10, the stripper 20 and the punch 30 may be fixed, and each of the others may be configured to move independently of the one. As another example, each of the die 10, the stripper 20 and the punch 30 may be configured to move independently of each other.

The die 10 may be located on bottom of the pouch film F. The pouch film F may be placed on the die 10, to be more specific, the upper surface of the die 10.

The die 10 may have a forming space S1. The forming space S1 may be recessed downward from the upper surface of the die 10 or penetrate through the die 10. The forming space S1 may be a space into which the punch 30 as described below is inserted, applying pressure to the pouch film F.

The cross section of the forming space S1 may be roughly square or rectangular in shape, but is not limited thereto.

The die 10 may have a rounded die edge 10a. The die edge 10a may connect the upper surface of the die 10 and the inner circumference of the forming space S1. The die edge 10a may have a predetermined radius of curvature. As the die edge 10a is rounded, it may be possible to prevent a part of the pouch film F that contacts the die edge 10a from breaking when the pouch film F is stretched into the forming space S1.

The stripper 20 may face the die 10 with the pouch film F positioned therebetween. The stripper 20 may hold the pouch film F in place at the upper side of the die 10.

At least one of the die 10 or the stripper 20 may be configured to move, and the gap between the die 10 and the stripper 20 may change. The pouch film F may move in between the die 10 and the stripper 20 spaced apart from each other, and subsequently, when the die 10 and the stripper 20 get closer to each other, the pouch film F may be held in place between the die 10 and the stripper 20. That is, the pouch film F may be held in place between the upper surface of the die 10 and the lower surface of the stripper 20.

The stripper 20 may have an open portion S2 in which the punch 30 as described below is placed. The open portion S2 may penetrate the stripper 20 upwards from the lower surface.

The cross section of the open portion S2 may be roughly square or rectangular in shape, but is not limited thereto. The open portion S2 may be located on the forming space S1. The open portion S2 and the forming space S1 may face each other with the pouch film F positioned therebetween.

The punch 30 may apply pressure to the pouch film F while it is inserted into the forming space S1 of the die 10. Accordingly, the pouch film F may be stretched into the forming space S1.

The punch 30 may apply pressure to the pouch film F through the open portion S2 of the stripper 20.

The height of the punch 30 with respect to the die 10 within the open portion S2 may change. More specifically, at least one of the die 10 or the punch 30 may be configured to move, and a height difference between the upper surface of the die 10 and the lower surface of the punch 30 may change.

As an example, while the die 10 and the stripper 20 hold the pouch film F in place, the punch 30 may move down and apply pressure to the pouch film F. As another example, while the die 10 and the stripper 20 hold the pouch film F in place, the die 10 and the stripper 20 may move up together so that the punch 30 is inserted into the forming space S1.

The punch 30 may have a rounded punch edge 30a. The punch edge 30a may connect a lower surface 31 and an outer circumference 32 of the punch 30. The punch edge 30a may have a predetermined radius of curvature. As the punch edge 30a is rounded, it may be possible to prevent a part of the pouch film F that contacts the punch edge 30a from breaking when the punch 30 applies pressure to the pouch film F.

Meanwhile, the outer circumference 32 of the punch 30 includes a concave groove 33 formed along the outer circumference 32 of the punch 30 and configured to adsorb the pouch film F.

More specifically, while the punch 30 applies pressure to the pouch film F, a part of the pouch film F may be adsorbed onto the concave groove 33 as shown in FIG. 2. The part of the pouch film F adsorbed onto the concave groove 32 may experience little or no stretching. That is, the residual thickness of the part of the pouch film F adsorbed onto the concave groove 32 is not significantly reduced and may be kept relatively large.

In the pouch film F of FIGS. 1 to 4, the area marked with the dark shading (hereinafter, 'shaded area') indicates an area where stretching mostly occurs. The punch 30' shown in FIGS. 3 and 4 is a comparative example and refers to a commonly used punch that does not include the concave groove 33.

Compared with the length of the shaded area in FIG. 1, the length of the shaded area in FIG. 2 may slightly increase. In contrast, compared with the shaded area in FIG. 3, it can be seen that the length of the shaded area in FIG. 4 significantly increases. In other words, a length increase ratio and a thickness decrease ratio of the shaded area stretched by the punch 30 according to this embodiment may be smaller than a length increase ratio and a thickness decrease ratio of the shaded area stretched by the punch 30' according to the comparative example. Accordingly, it may be possible to reduce crack risks in the pouch film F.

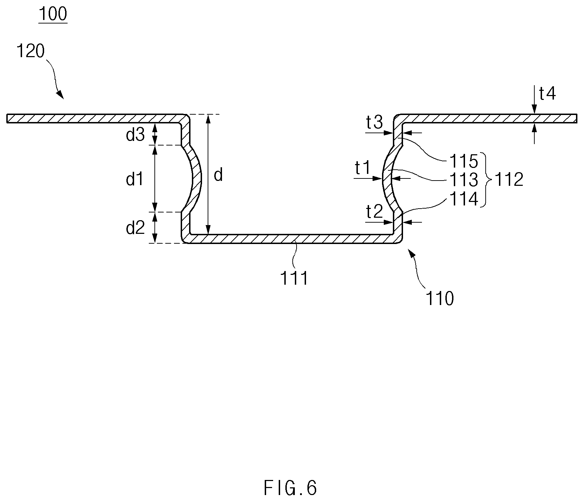

In addition, the part of the pouch film F that will become concave by adsorption into the concave groove 33 may be flattened in the subsequent process of manufacturing the battery cell. That is, the final depth of a cup portion 110 (see FIG. 6) may be sufficiently large. Accordingly, the punch 30 does not need to stretch the pouch film F to an excessive extent to make sure that the final depth of the cup portion 110 (see FIG. 6) is sufficiently large, thereby further reducing crack risks in the pouch film F.

Hereinafter, the concave groove 33 of the punch 30 and its related components will be described in more detail.

The outer circumference 32 of the punch 30 may further include a first circumferential surface 34 located below the concave groove 33 and a second circumferential surface 35 located on the concave groove 33. The concave groove 33 may be formed roughly at the center of the outer circumference 32 of the punch 30 with respect to a direction in which the punch 30 is inserted (i.e., vertical direction in FIG. 2). The concave groove 33 may curve inwards from the first circumferential surface 34 and the second circumferential surface 35.

When the punch 30 is inserted into the forming space S1 of the die 10, the first circumferential surface 34, the second circumferential surface 35 and the concave groove 33 may face the inner circumference of the forming space S with the pouch film F positioned therebetween. Accordingly, an upper portion and a lower portion of the part of the pouch film F inserted between the outer circumference 32 of the punch 30 and the inner circumference of the forming space S1 may be properly stretched, and the part of the pouch film F corresponding to the die edge 10a and the punch edge 30a may be rounded.

With respect to the direction in which the punch 30 is inserted into the forming space S1, the length dimension of the concave groove 33 may be larger than the length dimension of each of the first circumferential surface 34 and the second circumferential surface 35. Accordingly, the part of the pouch film F adsorbed onto the concave groove 33 may have a sufficiently large area, and the part of the pouch film F that is significantly stretched may be reduced.

Meanwhile, the forming apparatus according to this embodiment may further include a negative pressure generation unit 40 connected to the punch 30 and configured to generate negative pressure to the concave groove 33. For example, the negative pressure generation unit 40 may include a vacuum pump.

As shown in FIGS. 1 and 2, the negative pressure generation unit 40 may be positioned outside of the punch 30 and connected to the punch 30 through a channel. In particular, when the punch 30 is configured to move, the channel may be configured to maintain the connection to the punch 30 despite the movement of the punch 30. For example, the channel may include a hose that is flexible and sufficiently long.

However, the negative pressure generation unit 40 is not limited thereto, and may be mounted on the punch 30.

The concave groove 33 may have a plurality of suction holes 33a to adsorb the pouch film F by applying negative pressure to the pouch film F. The plurality of suction holes 33a may be evenly distributed all over the concave groove 33. Accordingly, the pouch film F may be evenly adsorbed onto the concave groove 33.

The plurality of suction holes 33a may be communicating with the negative pressure generation unit 40. For example, the punch 30 may have a chamber (not shown) inside and the chamber may connect the negative pressure generation unit 40 to the plurality of suction holes 33a. Accordingly, when the negative pressure generation unit 40 operates, the pouch film F may be adsorbed onto the concave groove 33, to be more specific, the plurality of suction holes 33a.

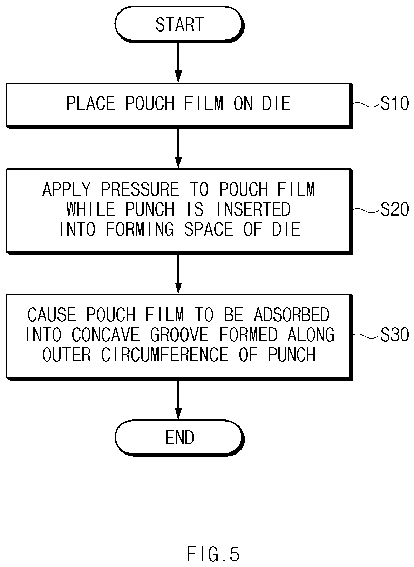

FIG. 5 is a flowchart of a forming method according to another embodiment of the present disclosure.

Hereinafter, the forming method performed to form the pouch film F using the above-described forming apparatus will be described as another embodiment of the present disclosure.

The forming method according to an embodiment of the present disclosure may include the step (S10) of placing the pouch film F on the die 10, the step (S20) of applying, by the punch 30, pressure to the pouch film F while the punch 30 is inserted into the forming space S1 of the die 10, and the step (S30) to causing the pouch film F to be adsorbed onto the concave groove 33 formed along the outer circumference 32 of the punch 30.

In the step (S10) of placing the pouch film F on the die 10, the stripper 20 may hold the pouch film F in place on the upper surface of the die 10.

In the step (S20) of applying, by the punch 30, pressure to the pouch film F, the punch 30 may be inserted into the forming space S1 of the die 10, and the pouch film F may be stretched by the punch 30.

In the step (S30) of causing the pouch film F to be adsorbed onto the concave groove 33, the negative pressure generation unit 40 may operate. The negative pressure generation unit 40 may operate immediately before the punch 30 applies pressure to the pouch film F, or after the punch 30 applies pressure to the pouch film F at or above a predetermined level. When the negative pressure generation unit 40 operates, negative pressure may be generated to the plurality of suction holes 33a of the concave groove 33, and the pouch film F may be adsorbed onto the concave groove 33.

Accordingly, the part of the pouch film adsorbed onto the concave groove may experience little or no stretching, and the stretch length of the entire pouch film may be reduced. Accordingly, it may be possible to reduce crack risks in the pouch film. In addition, the part of the pouch film F adsorbed onto the concave groove 33 may be flattened in the subsequent process of manufacturing the battery cell. Accordingly, the punch 30 does not need to stretch the pouch film F to an excessive extent to make sure that the final depth of the cup portion 110 (see FIG. 6) is sufficiently large, thereby further reducing crack risks in the pouch film F.

FIG. 6 is a cross-sectional view of a pouch-type exterior according to still another embodiment of the present disclosure.

Hereinafter, the pouch-type exterior 100 manufactured by the above-described forming apparatus will be described as still another embodiment of the present disclosure.

The pouch-type exterior 100 according to an embodiment of the present disclosure may be manufactured by forming of the pouch film F. The pouch-type exterior 100 may include the cup portion 110 formed into a recessed shape, and a terrace portion 120 connected to the cup portion 110. The cup portion 110 may be a part of the pouch film F pressed by the punch 30, and the terrace portion 120 may be a part of the pouch film F held in place between the die 10 and the stripper 20.

The cup portion 110 may include a bottom portion 111 having a predetermined depth (d) with respect to the terrace portion 120, and a circumference portion 112 connecting the bottom portion 111 to the terrace portion 120. The depth dimension (d) of the cup portion 110 may refer to a recessed depth from the terrace portion 120 to the bottom portion 111.

The circumference portion 112 of the cup portion 110 may include a concave portion 113 that curves inwards. The concave portion 113 may be a part of the pouch film F adsorbed onto the concave groove 33 of the punch 30.

The circumference portion 112 of the cup portion 110 may further include a first circumference portion 114 located between the bottom portion 111 and the concave portion 113 of the cup portion 110, and a second circumference portion 115 located between the concave portion 113 and the terrace portion 120. The first circumference portion 114 may be located below the concave portion 113, and the second circumference portion 115 may be located on the concave portion 113. The first circumference portion 114 may be a part corresponding to the first circumferential surface 34 of the punch 30. The second circumference portion 115 may be a part corresponding to the second circumferential surface 35 of the punch 30.

The concave portion 113 may be formed roughly at the center of the circumference portion 112 of the cup portion 110 with respect to the depth direction of the cup portion 110. The concave portion 113 may curve inwards from the first circumference portion 114 and the second circumference portion 115.

With respect to the depth direction of the cup portion 110, the length dimension (d1) of the concave portion 113 may be more than half the depth dimension (d) of the cup portion 110. With respect to the depth direction of the cup portion 110, the length dimension (d1) of the concave portion 113 may be larger than the length dimension (d2) of the first circumference portion 114 and the length dimension (d3) of the second circumference portion 115. Accordingly, the concave portion 33 may have a sufficiently large area, and the part of the cup portion 110 that is significantly stretched may be reduced.

In the process of forming the cup portion 110 using the punch 30, the part corresponding to the concave portion 113 may be less stretched than the part corresponding to the first circumference portion 114 and the second circumference portion 115. In relation to this, referring to FIG. 2, the part of the pouch film F (shaded area) where stretching mostly occurs may include the part corresponding to the first peripheral portion 114 and the second peripheral portion 115.

Accordingly, the thickness decrease ratio of the part of the pouch film F corresponding to the concave portion 113 may be smaller than the thickness decrease ratio of the part corresponding to the first circumference portion 114 and the second circumference portion 115. That is, the thickness (t1) of the concave portion 113 may be larger than the thickness (t2) of the first circumference portion 114 and the thickness (t3) of the second circumference portion 115.

In particular, in the process of forming the cup portion 110 using the punch 30, the part corresponding to the concave portion 113 may experience little or no stretching. Accordingly, the thickness (t1) of the concave portion 113 may correspond to the thickness (t4) of the terrace portion 120. Here, corresponding may refer to identical or similar.

After the manufacture of the pouch-type exterior 100 is completed, an electrode assembly (not shown) may be housed in the cup portion 110, and in this process, the concave portion 113 may be flattened. Accordingly, the final depth of the cup portion 110 may be larger than the depth (d) in a state in which the concave portion 113 is formed. Therefore, there is an advantage that the electrode assembly having a larger thickness may be housed in the cup portion 110.

While the foregoing is provided to describe the technical aspects of the present disclosure by way of illustration, persons having ordinary skill in the technical field pertaining to the present disclosure will appreciate that a variety of changes and modifications may be made thereto without departing from the essential features of the present disclosure.

Therefore, the disclosed embodiments are provided to describe the technical aspects of the present disclosure but not intended to be limiting, and the technical scope of the present disclosure is not limited by these embodiments.

The scope of protection of the present disclosure should be interpreted by the appended claims, and it should be understood that the scope of protection of the present disclosure encompasses all the technical aspects within the equivalent scope.

### [List of Reference Numerals]

| | | | |
|---|---|---|---|
| 10: | Die | 10a: | Die edge |
| 20: | Stripper | 30: | Punch |
| 30a: | Punch edge | 31: | Lower surface (of punch) |
| 32: | Outer circumference (of punch) | 33: | Concave groove |
| 33a: | Suction hole | 34: | First circumferential surface |
| 35: | Second circumferential surface | 40: | Negative pressure generation unit |
| 100: | Pouch-type exterior | 110: | Cup portion |
| 111: | Bottom portion (of cup portion) | 112: | Circumference portion (of cup portion) |
| 113: | Concave portion | 114: | First circumference portion |
| 115: | Second circumference portion | 120: | Terrace portion |

## Claims

1. A pouch-type exterior comprising:
a cup portion formed into a recessed shape; and
a terrace portion connected to the cup portion,
wherein a circumference portion of the cup portion includes:
a concave portion that curves inwards;
a first circumference portion located between a bottom portion of the cup portion and the concave portion; and
a second circumference portion located between the concave portion and the terrace portion, and
wherein the concave portion curves inwards from the first circumference portion and the second circumference portion.

2. The pouch-type exterior according to claim 1,
wherein a length dimension of the concave portion is more than half a depth dimension of the cup portion with respect to a depth direction of the cup portion.

3. The pouch-type exterior according to claim 1,
wherein a length dimension of the concave portion is larger than a length dimension of each of the first circumference portion and the second circumference portion with respect to a depth direction of the cup portion.

4. The pouch-type exterior according to claim 1,
wherein a thickness of the concave portion is larger than a thickness of each of the first circumference portion and the second circumference portion.

5. The pouch-type exterior according to claim 1,
wherein a thickness of the concave portion corresponds to a thickness of the terrace portion.

6. A forming apparatus for forming a pouch film, the forming apparatus comprising:
a die having a forming space on which the pouch film is placed, wherein the forming space is recessed from an upper surface or penetrates through the die; and
a punch configured to apply pressure to the pouch film while the punch is inserted into the forming space,
wherein an outer circumference of the punch includes:
a concave groove formed along the outer circumference of the punch and configured to adsorb the pouch film.

7. The forming apparatus according to claim 6,
wherein the outer circumference of the punch further includes:
a first circumferential surface located below the concave groove; and
a second circumferential surface located on the concave groove, and
wherein the concave groove curves inwards from the first circumferential surface and the second circumferential surface.

8. The forming apparatus according to claim 7,
wherein when the punch is inserted into the forming space, the first circumferential surface, the second circumferential surface and the concave groove face an inner circumference of the forming space with the pouch film positioned therebetween.

9. The forming apparatus according to claim 7,
wherein with respect to a direction in which the punch is inserted into the forming space, a length dimension of the concave groove is larger than a length dimension of each of the first circumferential surface and the second circumferential surface.

10. The forming apparatus according to claim 6, further comprising:
a negative pressure generation unit connected to the punch and configured to generate negative pressure to the concave groove.

11. The forming apparatus according to claim 10,
wherein the concave groove has a plurality of suction holes communicating with the negative pressure generation unit and configured to adsorb the pouch film by applying the negative pressure to the pouch film.

12. A forming method for forming a pouch film, the forming method comprising the steps of:
placing the pouch film on a die;
applying, by a punch, pressure to the pouch film while the punch is inserted into a forming space of the die; and
causing the pouch film to be adsorbed onto a concave groove formed along an outer circumference of the punch.
